# EUROPÄISCHE PATENTANMELDUNG

(11) **EP 1 029 628 A1**
(43) Veröffentlichungstag der Anmeldung: **23.08.2000**
(21) Anmeldenummer: 00102563.4
(22) Anmeldetag: 07.02.2000
(51) Int. Cl.: B23K 26/14

(54) **Verfahren und Vorrichtung zur Lasermaterialbearbeitung mit koaxialem Gasstrom**

(30) Priorität: 11.02.1999 DE 19905739
(71) Anmelder: Linde Technische Gase GmbH, 82049 Höllriegelskreuth (DE)
(72) Erfinder: Herrmann, Johann, 85716 Unterschleissheim (DE)
(74) Vertreter: Obermüller, Bernhard

(57) **Zusammenfassung**

Die Erfindung betrifft ein Verfahren und eine Vorrichtung zur Lasermaterialbearbeitung (insbesondere Schweißen und Schneiden), wobei ein fokussierter Laserstrahl (5) auf die zu bearbeitende Werkstückoberfläche (11) geführt wird und ein Gasstrom (10) über eine zur Laserstrahlachse koaxial angeordnete Düse (1) gegen die Werkstückoberfläche geleitet wird. Erfindungsgemäß wird der Gasstrom (10) im wesentlichen ringförmig um den Laserstrahl (5) gegen die Werkstückoberfläche (11) geführt, wobei der Gasstrom (10) im Innern des Ringstromes eine zur Laserstrahlachse hin gerichtete Radialkomponente aufweist. Bevorzugt ist die im Innern des Ringstromes zur Laserstrahlachse gerichtete Radialkomponente des Gasstromes (10) so ausgebildet, daß der Gasstrom (10) die Bearbeitungsstelle auf dem Werkstück (11) abdeckt. Der Ringstrom kann durch einen Kanal (6) erzeugt werden, der Einbauten (8, 9) umfaßt.

## Beschreibung

Die Erfindung betrifft ein Verfahren zur Lasermaterialbearbeitung, wobei ein fokussierter Laserstrahl auf die zu bearbeitende Werkstückoberfläche geführt wird und ein Gasstrom über eine zur Laserstrahlachse koaxial angeordnete Düse gegen die Werkstückoberfläche geleitet wird. Die Erfindung betrifft darüber hinaus eine Vorrichtung zur Lasermaterialbearbeitung, welche Mittel zum Führen eines fokussierten Laserstrahls auf die zu bearbeitende Werkstückoberfläche und eine zur Laserstrahlachse koaxial angeordnete Düse zur Zufuhr eines Gasstromes gegen die Werkstückoberfläche umfaßt.

Unter einem fokussierten Laserstrahl wird im Rahmen der Erfindung ein im wesentlichen auf die Werkstückoberfläche fokussierter Laserstrahl verstanden. Außer bei der überwiegend eingesetzten Methode mit auf die Werkstückoberfläche fokussierter Laserstrahlung kann die Erfindung auch bei der selten benutzten Variante mit nicht exakt auf die Werkstückoberfläche fokussierter Strahlung angewandt werden.

Die Eigenschaften der Laserstrahlung, insbesondere die Intensität und gute Fokussierbarkeit, haben dazu geführt, daß Laser heute in vielen Gebieten der Materialbearbeitung zum Einsatz kommen. Die Laserbearbeitungsanlagen sind an sich bekannt. In der Regel weisen sie einen Laserbearbeitungskopf, gegebenenfalls mit einer zum Laserstrahl koaxial angeordneten Düse auf. Oftmals werden Laserbearbeitungsanlagen in Verbindung mit einer CNC-Steuerung eingesetzt.

Als Laserbearbeitungsverfahren sind vor allem das Laserstrahlschneiden, das Laserstrahlschweißen und Verfahren der Laserstrahloberflächenbehandlung bekannt. Beim Laserstrahlschneiden wird zwischen drei Verfahrensvarianten unterschieden, dem Laserstrahlbrennschneiden, dem Laserstrahlschmelzschneiden und dem Laserstrahlsublimierschneiden. Bei den Verfahren der Laserstrahloberflächenbehandlung umfassen vor allem das Laserstrahlhärten, das Laserstrahlumschmelzen, das Laserstrahllegieren, das Laserstrahlbeschichten und das Laserstrahlbohren. Die Verfahren der Laserstrahloberflächenbehandlung finden in der Regel dort Verwendung, wo konventionelle Oberflächenverfahren nicht oder nur mit großen Nachteilen eingesetzt werden können.

Bei den aufgezählten Verfahren wird durch die hohe Energie des Laserstrahls Material des zu bearbeitenden Werkstücks erhitzt, aufgeschmolzen oder verdampft. Bei der Lasermaterialbearbeitung kommen üblicherweise Schutz- und/oder Prozeßgase bzw. Arbeitsgase zum Einsatz. Je nach Verfahren und zu bearbeitendem Material können die eingesetzten Gase unterschiedliche Aufgaben zu erfüllen haben. So bewirkt beispielsweise der Einsatz eines harten Gasstrahls einen Laserschnitt, bei Abdeckung durch Schutzgas kann eine Schweißnaht, eine Härtespur, eine Spur um geschmolzenes Material, eine Beschriftung, eine Gravur oder dergleichen erzeugt werden. Bei vielen Verfahren der Lasermaterialbearbeitung wird metallisches und/oder sonstiges Material auf Temperaturen erhitzt, bei denen eine Reaktion mit den einhüllenden Gasen stattfindet. In vielen Fällen werden dazu technische Gase eingesetzt, um diese Materialberarbeitungsprozesse effektiver, schneller und/oder mit verbesserter Qualität durchführen zu können.

Die Gasatmosphäre in der Bearbeitungszone besteht bei den erwähnten Laserbearbeitungsprozessen vielfach aus einem Gemisch aus dem oder den eingesetzten Arbeitsgas(en) und der umgebenden Luft. Als Grund hierfür sind vor allem unzureichende Gaszuführungen zu nennen, die zu Verwirbelungen zwischen Arbeitsgasströmungen und Umgebungsluft führen. Konkret bedeutet das beispielsweise für einzelne Laserbearbeitungsverfahren:
- Laserschweißnähte beispielsweise bei Edelstahlschweißungen werden oxidiert und müssen anschließend nachgearbeitet werden,
- Härtespuren sind oxidiert und müssen anschließend nachgearbeitet werden,
- Schweißnähte enthalten Poren oder es treten andere qualitätsmindernde Merkmale auf.

Vielfach sind die Gasdüsen sehr klein ausgebildet, so daß insbesondere bei schnelleren Schneid- und Schweißprozessen das bearbeitete Material bereits aus dem Schutzgasstrom gelangt, ohne daß vorher eine ausreichende Abkühlung des Materials stattgefunden hat, und an der Luftatmosphäre Nachoxidationen der Oberflächen auftreten können.

Der vorliegenden Erfindung liegt daher die Aufgabe zugrunde, ein Verfahren und eine Vorrichtung der eingangs genannten Art aufzuzeigen, bei welchen der Laserbearbeitungsprozeß durch eine modifizierte Gaszufuhr verbessert wird. Insbesondere sollen Qualitätseinbußen bei der Laserbearbeitung aufgrund der Atmosphäre vermieden werden.

Diese Aufgabe wird erfindungsgemäß dadurch gelöst, daß der Gasstrom im wesentlichen ringförmig um den Laserstrahl gegen die Werkstückoberfläche geführt wird, wobei der Gasstrom im Innern des Ringstromes eine zur Laserstrahlachse hin gerichtete Radialkomponente aufweist.

Die Erfindung beruht auf der Idee, einerseits ein im wesentlichen parallel zur Laserstrahlachse ausgebildetes Strömungsfeld in Ringform vorzusehen und andererseits eine Teilströmung im Innern der Ringströmung radial abzulenken. Auf diese Weise kann die Vermischung von Schutz- oder Prozeßgasen bzw. Arbeitsgasen mit der umgebenden Luft relativ gering gehalten werden.

Vorteilhafterweise ist die im Innern des Ringstromes zur Laserstrahlachse gerichtete Radialkomponente des Gasstromes so ausgebildet, daß der Gasstrom die Bearbeitungsstelle auf dem Werkstück abdeckt. Durch diese Maßnahme kann die Qualität der Bearbeitung zusätzlich gesteigert werden.

Bei der Erfindung wird bevorzugt abgesehen vom Innenbereich mit der Radialkomponente der Gasströmung ein im wesentlichen homogenes Strömungsfeld erzeugt. Die Gasströmung sollte ein möglichst laminares Strömungsprofil aufweisen. Die angestrebte Gasströmung gewährleistet, daß innerhalb eines relativ großen Raumes die Reinheit der eingesetzten Gase erhalten bleibt. Die Gase können daher ihre optimale Wirkung für im Bearbeitungsprozeß entfalten. Die Ergebnisse sind konstant und nicht von wechselnden Anteilen an eingewirbelter Umgebungsluft abhängig. Durch die großräumige Gasabdeckung können auch schädliche Reaktionen des noch heißen Materials mit der Atmosphäre wie beispielsweise ein Nachoxidieren wirksam verhindert werden.

Die zum Laserstrahl nicht koaxial angeordnete Düse kann einen Kanal (Düsenkanal) zur Erzeugung des Ringstromes aufweisen. Durch den Kanal in der Düse wird die Bildung des im wesentlichen parallel zur Laserstrahlachse ausgebildeten Strömungsfeldes mit Ringform unterstützt. Im Kanal und/oder am werkstückseitigen Kanalende können Einbauten vorhanden sein.

Es können Einbauten am Düsenaustritt vorgesehen sein, so daß der Gasstrom über mehrere Öffnungen aus dem Düsenkanal ausströmt. Der Düsenaustritt kann beispielsweise mit einem Bohrungsfeld, einem Sieb oder Gitter, einem Lochblech oder dergleichen als Einbauten ausgestattet sein. Damit kann die Strömung optimiert werden. Dabei können vorzugsweise Öffnungen mit unterschiedlicher Geometrie zur Erzeugung der im wesentlichen parallel zur Laserstrahlachse ausgebildeten Ringströmung und zur Ausbildung der Radialkomponente im Innern des Strömungsfeldes vorgesehen sein. Zur Erzeugung der im wesentlichen parallel zur Laserstrahlachse ausgebildeten Ringströmung eignen sich beispielsweise im wesentlichen kreisförmige Öffnungen. Diese sollten bevorzugt einen Durchmesser zwischen 0,1 und 5 mm, besonders bevorzugt zwischen 0,5 und 2 mm, aufweisen. Zur Ausbildung der Radialkomponente können vorteilhafterweise im wesentliche schlitzförmige Öffnungen verwendet werden. Diese Öffnungsschlitze besitzen beispielsweise eine Längserstreckung zwischen 1 und 10 mm, bevorzugt zwischen 2 und 5 mm.

Die Außenkontur der Düsenaustrittsfläche kann grundsätzlich beliebig gestaltet sein. Die Düsenaustrittsflächen können plan, aber auch räumlich gekrümmt sein (z.B. sphärisch).

In Ausgestaltung der Erfindung sind die Öffnungen zum Ausströmen des Gasstromes aus der Düse am dem Werkstück zugewandten Ende des Düsenkanals angeordnet.

Mit den Einbauten insbesondere im Kanal können Mittel zur Homogenisierung des Gasstromes vorgesehen sein. Die Düse bzw. der Düsenkanal enthält dazu bevorzugt ein Homogenisatormaterial. Bei dem Homogenisatormaterial handelt es sich um flächiges, gasdurchlässiges Material, welches dem Gasfluß auf der ganzen Fläche einen möglichst gleichen Strömungswiderstand entgegenstellt oder am Rand einer höheren und im Zentrum der Strömung einen niedrigeren Strömungswiderstand darstellt. Es kann sich dabei um Lagen von Geweben, Sintermaterial, Stahlwolle, Lochbleche und dergleichen handeln. Auch Materialien wie Holz mit Kanälen in vertikaler Richtung sind denkbar. Dieses Homogenisatormaterial soll gewährleisten, daß eine verhältnismäßig homogene Gasströmung zwischen Düse und Werkstückoberfläche auftritt und Verwirbelungen und Vermischungen mit der umgebenden Atmosphäre vermieden werden.

Durch die beschriebenen Maßnahmen kann der Laserbearbeitungsprozeß durch die Gasströmung der koaxial angeordneten Düse großflächig abgedeckt werden. Auf diese Weise können qualitätsschädigende Einflüsse der Atmosphäre vermieden oder zumindest wesentlich verringert werden. Unabhängig davon wird mit der Gasströmung ein Schutz der optischen Elemente (Linse, Spiegel und dergleichen) der Lasermaterialbearbeitungsanlage erreicht.

Die Erfindung kann im Zusammenhang mit allen Arten von Lasern zur Anwendung kommen. Vor allem eignet sie sich für den Einsatz bei der Laserbearbeitung mit Eximer-Lasern, CO₂-Lasern, Nd-YAG-Lasern und Dioden-Lasern.

Die Erfindung ist grundsätzlich bei allen Laserbearbeitungsprozessen einsetzbar wie beispielsweise beim Schweißen, Schneiden, Beschriften, Umschmelzen, Härten, Glasieren, Legieren, Gaslegieren, Sintern, Abtragen, Biegen, Bohren, Beschichten. Sie ist in besonderem Maße für das Schweißen geeignet, bietet aber auch beim Schneiden (z.B. von Titan) Vorteile. Als Werkstückmaterialeien kommen insbesondere alle Materialien in Betracht, bei denen bei höheren Temperaturen Reaktionen mit Gasen auftreten können: Dies sind beispielsweise Metalle, Glas, Holz, Kunststoffe, Silizium.

Als Gase für den erfindungsgemäßen Einsatz eigenen sich grundsätzlich alle Gase oder Gasgemische, insbesondere inerte Gase wie Helium, Neon, Argon, aber auch Stickstoff, Sauerstoff, Kohlendioxid, Wasserstoff, Kohlenwasserstoffe und Gemische der genannten Gase.

Im folgenden soll die Erfindung anhand eines Ausführungsbeispieles näher erläutert werden.

Hierbei zeigen:
- Figur 1: eine koaxial zur Laserstrahlachse angeordnete Düse einer erfindungsgemäßen Vorrichtung zur Lasermaterialbearbeitung mit Laserstrahl und
- Figur 2: ein Beispiel für eine Austrittsfläche der in Figur 1 dargestellten Düse.

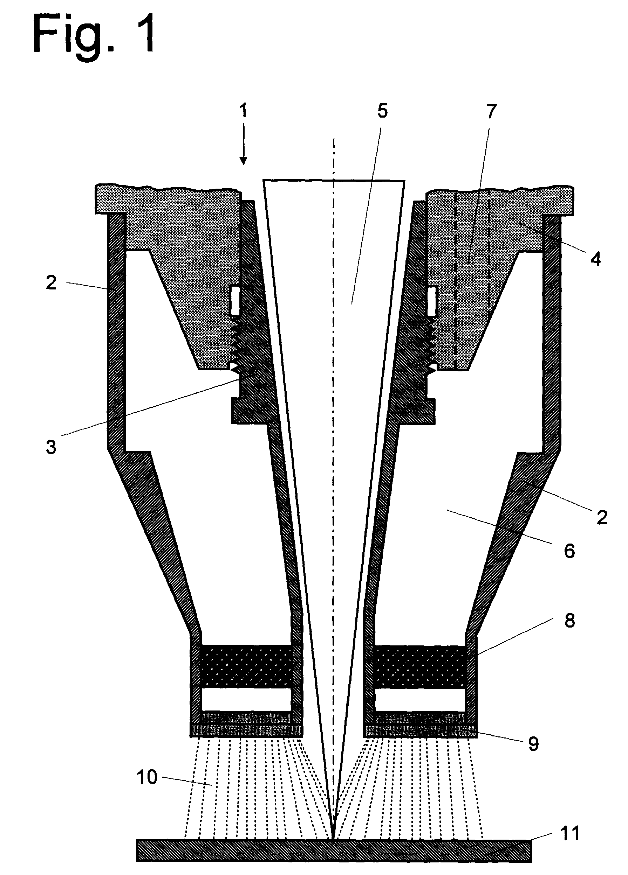

In **Figur 1** ist eine koaxial zur Laserstrahlachse angeordnete Düse 1 einer Vorrichtung zur Lasermaterialbearbeitung schematisch dargestellt. Üblicherweise ist die Düse 1 in einem Laserbearbeitungskopf einer Bearbeitungsvorrichtung eingebaut. Der Laserstrahl 5 wird fokussiert auf die Oberfläche des zu bearbeitenden Werkstücks 11 geleitet.

Die Laserbearbeitungsdüse 1 umfaßt ein Außenteil 2, ein Innenteil 3 und ein Halteteil 4. Zwischen Außenteil 2 und Innenteil 3 befindet sich der Düsenkanal 6. Der Kanal 6 enthält Einbauten (8, 9). Es ist im Kanal ein Homogenisatormaterial 8 (Material zur Homogenisierung der Gasströmung) angeordnet. Das Homogenisatormaterial 8 besteht beispielsweise aus Stahlwolle. Eine typische Stärke für das Homogenisatormaterial 8 liegt bei 3 mm.

An der Austrittsfläche der Düse bzw. am dem Werkstück 11 zugewandten Ende des Kanals 6 ist ein Endstück 9 (Düsenring) eingebaut, um dem Gasstrom 10 die gewünschte Strömungsrichtung zu geben. Schutz- oder Prozeßgas bzw. Arbeitsgas wird über einen Gaszuführung 7 in den Kanal 6 der Düse 1 eingeleitet. Von der Düse 1 wird eine im wesentlichen homogene und parallele Gasströmung 10 auf die Werkstückoberfläche 11 geleitet. Der Gasstrom 10 weist aber im Innern des Ringstromes eine zur Laserstrahlachse hin gerichtete Radialkomponente auf. Das Werkstück 11 wird weit über die eigentliche Bearbeitungsstelle (Auftreffpunkt der Laserstrahlung 5) hinaus mit dem Gasstrom 10 abgedeckt, beispielsweise etwa 10 mm um den fokussierten Laserstrahl 5 herum.

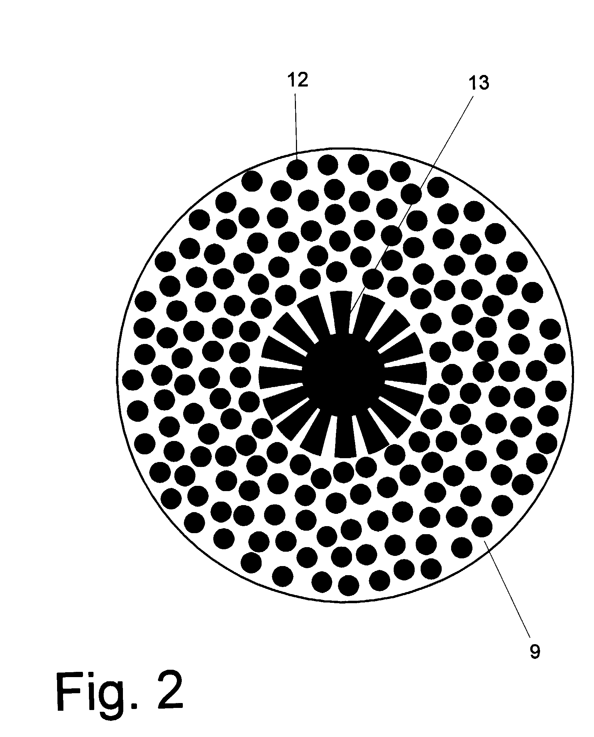

**Figur 2** zeigt beispielhaft den Aufbau einer Austrittsfläche zu der in Figur 1 dargestellten Düse 1. Das den Kanal 6 abschließende Endstück 9 umfaßt verschiedene Öffnungen (12, 13) zum Ausströmen des Gasstromes 6 aus der Düse 1. Einerseits sind kreisförmige Öffnungen 12 (beispielsweise Bohrungen) zum Erzeugen einer im wesentlichen zur Laserstrahlachse parallelen Gasströmung vorhanden. Andererseits sorgen Öffnungsschlitze 13 dafür, daß die Gasströmung im Innern die gewünschte Radialkomponente erhält.

Die kreisförmigen Öffnungen 12 weisen beispielsweise einen Durchmesser von 1 mm auf. Die Öffnungsschlitze 13 besitzen beispielsweise eine Länge von 3 mm. Das Endstück 9 hat beispielsweise eine Stärke von 2 oder 3 mm.

## Patentansprüche

1. Verfahren zur Lasermaterialbearbeitung, wobei ein fokussierter Laserstrahl (5) auf die zu bearbeitende Werkstückoberfläche (11) geführt wird und ein Gasstrom (10) über eine zur Laserstrahlachse koaxial angeordnete Düse (1) gegen die Werkstückoberfläche geleitet wird, **dadurch gekennzeichnet**, daß der Gasstrom (10) im wesentlichen ringförmig um den Laserstrahl (5) gegen die Werkstückoberfläche (11) geführt wird, wobei der Gasstrom (10) im Innern des Ringstromes eine zur Laserstrahlachse hin gerichtete Radialkomponente aufweist.

2. Verfahren nach Anspruch 1, dadurch gekennzeichnet, daß die im Innern des Ringstromes zur Laserstrahlachse gerichtete Radialkomponente des Gasstromes (10) so ausgebildet ist, daß der Gasstrom (10) die Bearbeitungsstelle auf dem Werkstück (11) abdeckt.

3. Verfahren nach Anspruch 1 oder 2, dadurch gekennzeichnet, daß der Ringstrom durch einen Kanal (6) erzeugt wird, der Einbauten (8, 9) umfaßt.

4. Verfahren nach einem der Ansprüche 1 bis 3, dadurch gekennzeichnet, daß der Gasstrom (6) über mehrere Öffnungen (12, 13) aus der Düse (1) ausströmt.

5. Verfahren nach Anspruch 4, dadurch gekennzeichnet, daß durch im wesentlichen schlitzförmige Öffnungen (13) die Radialkomponente des Gasstromes (10) erzeugt wird.

6. Verfahren nach einem der Ansprüche 3 bis 5, dadurch gekennzeichnet, daß mittels Einbauten (8) eine Homogenisierung des Gasstromes (6) bewirkt wird.

7. Vorrichtung zur Lasermaterialbearbeitung umfassend Mittel zum Führen eines fokussierten Laserstrahls (5) auf die zu bearbeitende Werkstückoberfläche (11) und eine zur Laserstrahlachse koaxial angeordnete Düse (1) zur Zufuhr eines Gasstromes (10) gegen die Werkstückoberfläche, **dadurch gekennzeichnet**, daß Mittel (12, 13) zur Ausbildung eines im wesentlichen ringförmig um den Laserstrahl (5) strömenden Gasstromes (10) mit einer zur Laserstrahlachse hin gerichteten Radialkomponente im Innern des Ringstromes vorgesehen sind.

8. Vorrichtung nach Anspruch 7, dadurch gekennzeichnet, daß die Mittel (13) zur Ausbildung der zur Laserstrahlachse hin gerichteten Radialkomponente im Innern des Ringstromes so ausgebildet sind, daß der Gasstrom (10) die Bearbeitungsstelle auf dem Werkstück (11) abdeckt.

9. Vorrichtung nach einem der Ansprüche 7 oder 8, dadurch gekennzeichnet, daß die Düse (1) einen Kanal (6) zur Erzeugung des Ringstromes aufweist, welcher Einbauten (8, 9) umfaßt.

10. Vorrichtung nach einem der Ansprüche 7 bis 9, dadurch gekennzeichnet, daß mehrere Öffnungen (12, 13) zum Ausströmen des Gasstromes (6) aus der Düse (1) vorgesehen sind.

11. Vorrichtung nach Anspruch 10, dadurch gekennzeichnet, daß im wesentlichen schlitzförmige Öffnungen (13) zur Erzeugung der Radialkomponente des Gasstromes (10) vorgesehen sind.

12. Vorrichtung nach einem der Ansprüche 9 bis 11, dadurch gekennzeichnet, daß die Einbauten Mittel (8) zur Homogenisierung des Gasstromes umfassen.

13. Vorrichtung nach einem der Ansprüche 10 bis 12, dadurch gekennzeichnet, daß die Öffnungen (12, 13) zum Ausströmen des Gasstromes (6) aus der Düse (1) am dem Werkstück (11) zugewandten Ende des Kanals (6) angeordnet sind.
